(19) Europäisches Patentamt
European Patent Office
Office européen des brevets

(11) Publication number: 0 020 279
B1

(12) **EUROPEAN PATENT SPECIFICATION**

(45) Date of publication of patent specification: **21.11.84**

(51) Int. Cl.$^3$: **C 08 F 6/04**

(21) Application number: **80400794.6**

(22) Date of filing: **04.06.80**

(54) **Process for fractionating a polar polymer.**

(30) Priority: **04.06.79 US 45580**

(43) Date of publication of application:
**10.12.80 Bulletin 80/25**

(45) Publication of the grant of the patent:
**21.11.84 Bulletin 84/47**

(84) Designated Contracting States:
**CH DE FR GB LI**

(56) References cited:
**FR-A-2 016 405**

(73) Proprietor: **EASTMAN KODAK COMPANY**
**343 State Street**
**Rochester New York 14650 (US)**

(72) Inventor: **Wu, Stephen Hong-Wei**
**P.O. Box 511**
**Kingsport Tennessee (US)**
Inventor: **Dannelly, Clarence C.**
**P.O. Box 511**
**Kingsport Tennessee (US)**

(74) Representative: **Parent, Yves et al**
**Kodak-Pathé Département des Brevets et**
**Licences 30, rue des Vignerons B.P. 60**
**F-94302 Vincennes Cedex (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 020 279 B1

## Description

Field of the Invention

This invention relates to a process for separating high molecular weight fractions from polymers containing a range of molecular weights, which process can be used for purifying such polymers.

Description of the Prior Art

As polymer technology is extended into more product areas, there is an increasing need for purification of polymeric substances. The nature of the impurities found in polymers depends on the origin of the polymers. In the case of synthetic polymers, the impurities are usually associated with the method of synthesis. In the case of natural polymers, the impurities are associated with the natural source of the polymer and the method of extraction or separation from that source.

In addition to simple removal of nonpolymeric impurities, it is frequently important to separate polymeric substances from relatively low or relatively high molecular weight fractions of the same polymeric substance to obtain narrow molecular weight fractions having optimum physical and chemical properties.

The separation processes that have been reported are either too expensive to operate or are suitable only for laboratory preparation of pure, specific molecular weight fractions of polymeric substances. The most important of these processes include precipitation from solution by addition of a nonsolvent liquid, chromatographic separation, sedimentation techniques, diffusion techniques and ultrafiltration using porous membranes.

U.S. Patent No. 2,945,016 relates to a process for separation of polymers comprising adding an open chain hydrocarbon to a solution of normally solid polymer in a cyclic hydrocarbon solvent, thereby causing the formation of a polymer-rich phase and a solvent-rich phase, and recovering at least one of said phases. The fractionation process of this invention is simpler and less expensive to operate than the prior art technique.

Summary of the Invention

The present invention provides a process for obtaining a high molecular weight fraction from a polar polymer selected from the group con sisting of polyelectrolytes, polymeric bases and polymeric acids, which comprises dissolving the polar polymer in a solvent which is also a solvent for a selected cross-linking (or coacervating) compound, mixing with the solution said cross-linking compound, soluble in a solvent, and having at least two proton donating or proton receiving groups which are opposite the polarity of the polar polymer in an amount sufficient to cross-link only the high molecular weight molecules of the polar polymer to form cross-linked high molecular weight polymer solids, and separating the cross-linked molecular weight solids from the solution. The separated high molecular weight solids may then be washed and the polymer fraction separated from the coacervating or cross-linking compound. Use of this process provides a simple, inexpensive, precise, and convenient way of extracting high molecular weight fractions from the polar polymer.

Detailed Description of the Invention

Polar polymers which may be used in the process of the invention are natural and synthetic polyelectrolytes, polymeric acids and polymeric bases. For example, polar polymers include those polymers containing carboxy, sulfate, sulfonate, phosphate, and phosphite groups, and salts of the groups. Also, polar polymers include those polymers containing unreacted acidic phenolic groups, polymers containing salts of phenolic groups, polymers containing weak acidic groups or salts of these groups such as the enolic form of diketones and the inorganic salts of these weak acidic groups, e.g. arsenic salts.

Basic polar polymers include polymers containing unreacted organic base radicals or salts of the radicals such as primary, secondary and tertiary aliphatic amine groups, i.e.,

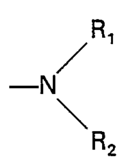

wherein $R_1$ and $R_2$ can be H, alkyl or aryl having from 1 to 20 carbon atoms, and cyclic amino groups, i.e.,

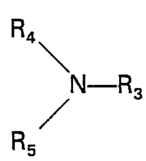

wherein $R_3$ can be H or alkyl having from 1 to 20 carbon atoms, and $R_4$ and $R_5$ form together an alicyclic ring structure.

Polar polymers also include those polymers derived from vinyl substituted hetrocyclic ring structures containing at least 4% nitrogen based on the total weight of the heterocyclic radical and wherein the total weight of such groups in the polymer are from 1 to 37 weight percent. Some preferred examples of such structures are:

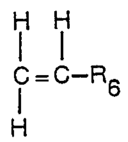 where $R_6$ is 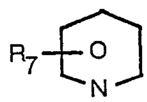 , 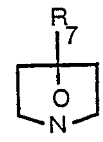 , 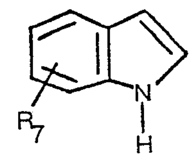 ,

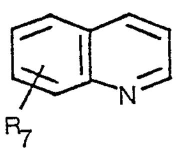 , 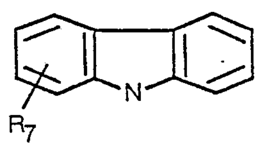 , 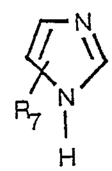 , 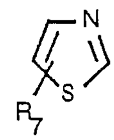 ,

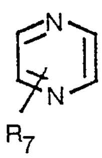 , 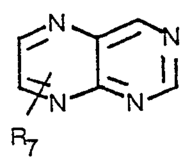 , 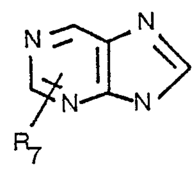 ,

wherein $R_7$ is any organic radical or radicals having a total molecular weight of less than 300.

Such compositions as homopolymers and copolymers containing the monomeric constituents vinylpyridine, derivatives of vinylpyridine, N,N-dialkyl ether esters and amides of acrylic and methacrylic acids, vinylcarbazole, allyl amine, diallylamine, ethylenimine, and derivatives of ethylenimine are included. Also included are either synthetic or natural polymers which are rendered basic by chemical reaction such a cellulose propionate morpholinobutyrate, reduction product of a polyacrylonitriles, polystyrene and derivatives of polystyrene. Also included are the acid salts and quaternary ammonium derivatives of basic amine containing polymers and tertiary derivatives of sulfide groups containing polymers.

Such compositions as homopolymers and copolymers containing the monomeric constituants acrylic acid, methacrylic acid, maleic acid, fumaric acid, itaconic acid, and ethylenically unsaturated monomers containing sulfate, phosphate, sulfonate, phosphonate, and phosphite groups are included. Also included are natural and synthetic polymers which contain unreacted acidic functionality obtained from chemical reaction starting with a neutral polymer.

Polymers containing both acidic and basic functionality can be fractioned by the process of the invention. For instance, polymers containing both amino groups and carboxylic acid groups such as the copolymer of N,N-diethylaminoethyl acrylate and acrylic acid may be separated from monomeric impurities and/or high or low molecular weight fractions. The invention is of particular value in the purification of natural proteins where cross-linking or coacervation and separation is performed at or near the isoelectric pH.

Solvents or mixtures of solvents used in this invention are capable of dissolving the polar polymers and selected cross-linking compounds, but allow precipitation or insolubilization of high molecular weight portions of polar polymers which cross-linking compounds in the solvent media.

Many solvents are useful in this invention. Useful solvents include water, alcohols, for example, methanol, ethanol, isopropanol, n-propanol, n-butanol, isobutanol, octanol, and ethylene glycol; ketones, for example, acetone, methyl ethyl ketone, diethyl ketone, and methyl isobutyl ketone; esters, for example, ethyl acetate, isopropyl acetate, butyl acetate; organic acids, for example, acetic acid, formic acid, propionic acid, and isobutyric acid; ethers, for example, methyl ether, diethyl ether, 1,4-dioxane; mineral acids and bases, for example, dilute aqueous hydrochloric acid, dilute aqueous sulfuric acid, dilute phosphoric acid, and dilute alkali solutions; and aromatic solvents, for example, benzene, xylene.

Some other useful solvents include nitromethane, dimethyl formamide, tetrahydrofuran, pyridine, chloroform, trichloroethylene, methylene chloride and ethylenedichloride.

Mixtures of two or more solvents may be used. Mixtures of solvents and nonsolvents for a particular polar polymer may also be used. The purpose of using mixtures of solvents or mixtures of solvents and non-solvents for a particular polar polymer is to adjust the polarity of the solvent systems. The desired polarity of the solvent is dependent on the particular polymer being purified. The polymer-solvent relationship is usually adjusted so that, although the polymer is fully dissolved, only small changes are required to precipitate the polymer. The precise adjustment required will be obvious to one skilled in the art of dissolving polymers.

Nonsolvents include n-pentane, n-hexane, n-heptane, cyclohexane, toluene hydrogenated naphthalenes, water, carbon tetrachloride, diethyl ether, petroleum ether and ethyl acetate.

The term coacervating or cross-linking compound is used herein to mean acids or bases which have at least two acidic or two basic groups opposite to the polarity of the polymer, and are capable of reacting with the dissolved polar polymer and wherein the reaction product is at least partially precipitated from solution in the selected solvent.

The polyfunctional acids or bases used in this invention have the general formula:

$$(X_1)_m—Q—(X_2)_n$$

where $X_1$ and $X_2$ represent proton-donating or proton-receiving groups, Q is the inorganic or organic moiety of the molecule, m and n are the multiplicity of the particular acid or base group. The total multiplicity, $n + m$, must be equal to or greater than two.

A wide variety of polyfunctional organic acids or bases may be employed as cross-linking compound. Organic acids in which there are at least two acid groups such as carboxylic, sulfur and phosphorus containing acid moieties may be employed. Organic bases in which there are at least two basic groups such as primary, secondary, tertiary, quaternary amines, heterocyclic amines, aromatic amines, may also be employed.

Examples of organic acids useful as cross-linking compounds include oxalic acid, malonic acid, succinic acid, adipic acid, sebacic acid, dimer acid, tartaric acid, phthalic acid, terephthalic acid, trimesic acid, trimellitic acid, 1,2,4,5-benzenetetracarboxylic acid, polysulfonic acids, and pyrophosphates.

Examples of organic bases useful as cross-linking compounds include ethylendiamine, unsymmetrical dimethylethylenediamine, N,N,N',N'-tetraethylenediamine, trimethylenediamine, hexamethylenediamine, phenylenediamine, imidazole, pyrimidine, purine, nicotine and 2,2'-bipyridine.

Examples of amphoteric organic compounds useful as cross-linking compounds include amino acids, polyamino acids, proteins and ethylenediaminetetracetic acid.

Also included as cross-linking compounds are polymers containing acidic and basic groups. Some typical cross-linking compounds of this type are polymers and copolymers of acrylic acid, methacrylic acid, maleic acid, fumaric acid, itaconic acid, vinyl substituted pyridines, vinyl quinolines, dialkyl substituted aminoethyl esters, and amides of acyrlic and methacrylic acid, vinyl carbazole, and modified natural polymers such as cellulose propionate morpholinobutyrate and carboxy cellulose. When a basic polymer is fractionated, an acidic cross-linking compound is used, and, when an acidic polymer is fractionated, a basic cross-linking or coacervating compound is used.

The process of this invention comprises first dissolving the polar polymer in the solvent. Solubility characteristics are well known in the art and are described in technical literature, for example, in "Textbook of Quantitive Inorganic Analysis" by Kolthoff and Sandell (The Macmillan Company, New York, 1948). Temperatures at or near room temperature are preferred. The polar polymer and solvent are preferably agitated to speed up the dissolving process. The cross-linking compound, which is also soluble in the solvent, is added to the solution to cross-link the higher molecular weight fraction of the dissolved polar polymer. The quantity of cross-linking compound that is used depends upon the amount of high molecular weight fraction that is to be removed from the polar polymer. As the quantity of cross-linking compound that is used is increased the molecular weight range of the high molecular weight fraction increases. The higher molecular weight fraction cross-links prior to lower molecular weight fractions as the cross-linking compound is added.

The higher molecular weight fraction of polymer and cross-linking compound can be separated from the solution by filtering or centrifuging. Following separation, the fraction is then purified by washing and separation of the polymer from the cross-linking compound. The polymer can be separated from the cross-linking compound by dissolving the cross-linked polymer in a suitable solvent and precipitating the cross-linking compound which can be removed by filtering or centrifuging, leaving the polymer in solution.

Example 1

Ten grams of poly(2-methyl-5-vinylpyridine/styrene) were dissolved in 200 ml acetone and 0.3 g succinic acid in acetone as cross-linking compound was added. The solution was vigorously agitated. The supernate which contained low molecular weight polymer was removed by centrifuging. The test was repeated using 0.4 and 0.6 g succinic acid. The number average molecular weights of the

polymers in the supernates obtained by boiling point elevation method are shown as follows:

| | Succinic Acid Added | No. Average Molecular Wt. |
|---|---|---|
| Supernate 1 | 0.3 g | 2258 |
| Supernate 2 | 0.4 g | 859 |
| Supernate 3 | 0.6 g | 839 |

These results indicate that separation of low molecular weight polymers was achieved by adjusting the amount of cross-linking compound added to the polymer solutions.

## Example 2

Ten grams poly(2-methyl-5-vinylpyridine/styrene) were dissolved in 200 ml acetone. Three-tenths gram succinic acid in acetone was added to the polymer solution with vigorous agitation at ~40°C. After the cloudy mixture was cooled, the supernate and cross-linked polymer were separated by centrifuging.

The cross-linked polymer was then washed with 200 ml acetone three times with agitation, heating, cooling, and centrifuging steps as described in Example 1. The purified cross-linked polymer was removed and dissolved in 200 ml 95/5 acetone/water. One gram $Ca(OH)_2$ was then added to precipitate the succinic acid in the solution. After the solution was cooled, the polymer solution was separated from the precipitate by centrifuging.

It was found that the supernate has a lower molecular weight than the original polymer, and the purified polymer has a higher molecular weight than the original polymer. The low molecular weight fraction (M.W. $\leq$1000 in the purified polymer was determined to be less than 10 ppm by ultra-membrane filtration followed by UV analysis of the vinyl pyridine moiety. The original polymer contained 1600 ppm low molecular weight fraction by the same analytical measurement.

## Example 3

Ten grams polymer purifed by the process described in Example 2 was dissolved in 200 ml acetone. Three-tenths gram succinic acid was added to precipitate the polymer. After removing the supernate, the cross-linked polymer was then dispersed in boiling acetone solution which contained 1% water. The solution was cooled to ~5°C. to allow the precipitation of the cross-linked polymer. The polymer succinic acid complex was then washed two more times with acetone which contained 1% water. Other steps to regenerate purified polymer were the same as described in Example 2. The final purified fraction exhibited higher molecular weight and a narrower molecular weight distribution than Example 2.

## Example 4

Ten grams of 80/20 methylmethacrylic acid/methyl methacrylate polymer were dissolved in acetone. Ethylenediamine, 0.4 g, in methanol was added to cross-link the polymer. The precipitate was separated from the supernate by centrifuging. The precipitate was washed with acetone/methanol solution 4 times as in the processes described in Example 2 and 3. Finally the precipitate was dissolved in methanol. A small amount of dilute HCl was added to precipitate the diamine. The purified polymer had a higher molecular weight and a narrower molecular weight distribution than the starting polymer. The first supernate solution, after removing the precipitate, was condensed and analyzed for molecular weight distribution. It contained a major portion of the low molecular weight fraction from the starting polymer solution.

## Example 5

Ten grams of 2-methyl-5-vinylpyridine/methylmethacrylic acid polymer was dissolved in acetone. 0.2 g low molecular weight polyacrylic acid (I.V. = 0.01) in acetone was added to the polymer solution. The supernate was analyzed for molecular weight distribution. It exhibited much narrower molecular weight distribution and contained 90% of the low molecular weight fraction. The precipitate was further washed three times with acetone/methanol solution. The cross-linked polymer was then dispersed in ethanol/water. Calcium hydroxide was added to precipitate polyacrylic acid. The purified polymer exhibited higher average molecular weight than the original polymer.

## Example 6

Poly(4-vinylpyridine) was fractionated by cross-linking techniques using a methanol and water solvent system and trimesic acid as a cross-linking compound. The polymer may be dissolved in the methanol/water system at ratios of 100/0 to 42/58. The polymer may be precipitated at methanol/water ratios of from 42/58 to 0/100. The non-overlapping of solubility of the polymer and

trimesic acid allows the proper selection of methanol/water ratios which may enhance the precipitation of the trimesic acid. The separation of polymer from trimesic acid can then be achieved. For example, 2.5 g poly(4-vinylpyridine) was dissolved in 10 ml of methanol. Water was added until the cloud point was reached. The volume of water to reach this point is 13.6 ml. Thus, the minimum methanol/water ratio for the polymer to stay in solution is 42/58.

Unless otherwise specified, all parts, percentages, ratios, etc., are on a weight basis.

**Claims**

1. The process for fractionating a polar polymer selected from the group consisting of polyelectrolytes, polymeric bases and polymeric acids, to obtain a high molecular weight fraction characterized by

a) dissolving the polar polymer in a solvent which is also a solvent for a selected cross linking (or coacervating) compound,

b) mixing with this solution said cross-linking compound soluble in said solvent and having at least two proton donating or proton receiving groups which are opposite the polarity of the polar polymer in an amount sufficient to form a solid cross-linked polymer from only the high molecular weight fraction of the polar polymer, and

c) separating the solid cross-linked polymer fraction from the solution.

2. The process according to Claim 1, wherein the polar polymer is poly(2-methyl-5-vinyl pyridine/styrene), the solvent is acetone and the cross-linking compound is succinic acid.

3. The process according to Claim 1, wherein the polar polymer is 80/20 methylmethacrylic acid/methyl methacrylate, the solvent is acetone and the cross-linking compound is ethylenediamine.

4. The process according to Claim 1, wherein the polar polymer is 2-methyl-5-vinylpyridine/methylmethacrylic acid, the solvent is acetone and the cross-linking compound is low molecular weight polyacrylic acid.

5. The process according to Claim 1, wherein the polar polymer is poly(4-vinylpyridine), the solvent is methanol and water and the cross-linking compound is trimesic acid.

**Revendications**

1. Procédé pour séparer une fraction à poids moléculaire élevé d'un polymère polaire choisi dans le groupe comprenant les polyélectrolytes, les polymères acides et les polymères basiques, caractérisé par les étapes suivantes:

a) on dissout le polymère polaire dans un solvant qui est aussi un solvant pour un composé de réticulation (ou de coacervation) choisi,

b) on mélange avec cette solution le dit composé de réticulation soluble dans ce solvant, et ayant au moins deux radicaux donneurs ou accepteurs de protons qui sont de polarité opposée à celle du polymère polaire, en quantité suffisante pour former un polymère réticulé solide à partir seulement de la fraction à poids moléculaire élevé du polymère polaire, et

c) on sépare la fraction du polymère réticulé solide de la solution.

2. Procédé conforme à la revendication 1, caractérisé en ce que le polymère polaire est un copolymère de 2-méthyl-5-vinylpyridine et de styrène, le solvant est l'acétone et le composé de réticulation est l'acide succinique.

3. Procédé conforme à la revendication 1, caractérisé en ce que le polymère polaire est un copolymère de l'acide méthylméthacrylique et du méthacrylate de méthyle dans un rapport de 80/20, le solvant est l'acétone et le composé de réticulation est l'éthylènediamine.

4. Procédé conforme à la revendication 1, caractérisé en ce que le polymère polaire est un copolymère de 2-méthyl-5-vinylpyridine et d'acide méthylméthacrylique, le solvant est l'acétone et le composé de réticulation est un acide polyacrylique de faible masse moléculaire.

5. Procédé conforme à la revendication 1, caractérisé en ce que le polymère polaire est la poly (4-vinylpyridine), le solvant est le méthanol et l'eau et le composé de réticulation est l'acide trimésique.

**Patentansprüche**

1. Verfahren zur Fraktionierung eines polaren Polymeren aus der Gruppe von Polyelektrolyten, polymeren Basen und polymeren Säuren zur Gewinnung einer hochmolekularen Fraktion, gekennzeichnet durch

a) Lösen des polaren Polymeren in einem Lösungsmittel, das gleichzeitig ein Lösungsmittel für ein ausgewähltes Vernetzungsmittel (oder Koazervationsmittel) ist,

b) Vermischung der Lösung mit einem Vernetzungsmittel, das in dem Lösungsmittel löslich ist und mindestens zwei Protonen-spendende oder Protonen-aufnehmende Gruppen aufweist, die eine zum polaren Polymer entgegengesetzte Polarität aufweisen, in einer Menge, die ausreicht, um ein festes, quervernetztes Polymer von lediglich der Fraktion des polaren Polymeren mit dem hohen Molekulargewicht zu erzeugen und

c) Trennung der festen quervernetzten Polymerfraktion von der Lösung.

2. Verfahren nach Anspruch 1, dadurch gekennzeichnet, daß das polare Polymer aus Poly(2-methyl-5-vinylpyridin/styrol), das Lösungsmittel aus Aceton und das Vernetzungsmittel aus Bernsteinsäure bestehen.

3. Verfahren nach Anspruch 1, dadurch gekennzeichnet, daß das polare Polymer aus Methylmethacrylsäure/Methylmethacrylat im Verhältnis 80/20, das Lösungsmittel aus Aceton und das Vernetzungsmittel aus Ethylendiamin bestehen.

4. Verfahren nach Anspruch 1, dadurch gekennzeichnet, daß das polare Polymer aus 2-Methyl-5-vinylpyridin/Methylmethacrylsäure, das Lösungsmittel aus Aceton und das Vernetzungsmittel aus Polyacrylsäure von niederem Molekulargewicht bestehen.

5. Verfahren nach Anspruch 1, dadurch gekennzeichnet, daß das polare Polymer aus Poly(4-vinylpyridin), das Lösungsmittel aus Methanol und Wasser und das Vernetzungsmittel aus Trimesinsäure bestehen.